(19) Europäisches Patentamt
European Patent Office
Office européen des brevets

(11) **EP 3 901 029 A1**

(12) **EUROPEAN PATENT APPLICATION**
published in accordance with Art. 153(4) EPC

(43) Date of publication:
**27.10.2021 Bulletin 2021/43**

(51) Int Cl.:
**B64C 1/08** (2006.01)  **F03D 9/00** (2016.01)

(21) Application number: **20748862.8**

(86) International application number:
**PCT/CN2020/000028**

(22) Date of filing: **04.02.2020**

(87) International publication number:
**WO 2020/156018 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.02.2019 CN 201910108930**

(71) Applicants:
• **Luo, Conggui**
  **Beihai, Guangxi 536000 (CN)**
• **Zheng, Xiaoyan**
  **Beihai, Guangxi 536000 (CN)**

(72) Inventors:
• **Luo, Conggui**
  **Beihai, Guangxi 536000 (CN)**
• **Zheng, Xiaoyan**
  **Beihai, Guangxi 536000 (CN)**

(74) Representative: **Schmid, Wolfgang**
**Lorenz & Kollegen**
**Patentanwälte Partnerschaftsgesellschaft mbB**
**Alte Ulmer Strasse 2**
**89522 Heidenheim (DE)**

(54) **LOW-ENERGY CONSUMPTION HIGH-SPEED FLIGHT METHOD AND WING RING AIRCRAFT USING SAME**

(57)    A low energy consumption high-speed flight method, a wing ring mechanism (1), a flying saucer with wing rings, and a high-altitude power generation ring and an oppositely-pulling hovering-flight machine with the wing ring mechanism using the same are provided. The method enables the wing rings to tilt axially, thereby causing the orientation of the overall lift force of the wing ring to tilt to obtain a horizontal thrust. The wing ring mechanism has the wing rings, a wing-ring rotating assembly, and wing-ring deflecting members (2) each including a telescopic member and movable connecting members. The flying saucer takes the wing ring mechanism as a lift device. The high-altitude power generation ring has the wing ring mechanism and cables (4). The wing ring mechanism is connected to the upper end of the cable that is connected to a part of a side of the wing ring mechanism, which is not rotated along with the wing rings; and the lower end of the cable is connected to a ground tie point. The oppositely-pulling hovering-flight machine uses two or two sets of aerostats or aircrafts that are respectively located in two airflows with opposite wind directions. The two aerostats or aircrafts are connected mutually through any connector that prevents the aerostats or aircrafts from being separated.

**FIG. 9**

**Description**

**TECHNICAL FIELD**

The present disclosure relates to the field of low energy consumption high-speed flight method and related wing-ring aircraft technologies, such as a flying saucer with wing rings, a high-altitude power generation ring, a saucer-type oppositely-pulling hovering-flight machine, etc.

**BACKGROUND ART**

In the past, it was impossible for all aircrafts to fly at high speed with low energy consumption, and saucer-shaped aircrafts (including a flying saucer with wing rings) about humans could only fly slowly without jet engines. Even if the aircrafts are equipped with the jet engines, the speeds thereof cannot exceed those of helicopters, and is not even close to a speed of a jet plane with fixed fins. A method for deflecting fins in sequence can obtain the huge horizontal thrust, whereas each fin of the wing ring needs to be equipped with a deflecting member (see Luo Conggui' s patent documents for details, i.e., WO/2019/033691 and CN110282133A), which is too complicated and expensive for small-size wing-ring flying saucers (particularly model airplane toys about the flying saucers). If the jet engine is not equipped and the fins are not deflected, there exists a problem that how a flying saucer with wing rings flies at high speed with low energy consumption and low noise.

The earliest high-altitude power generation ring could only tie a ground traction cable to a portion of the lower end of a wing-ring aircraft which is close to the center axis. In this way, a wing ring mechanism can be forced to lean back, so that the surface of the wing ring tilts windward and the rotation thereof can be realized. Although the wing-ring aircraft that rotates horizontally may be tied a cable on the waist thereof, the wing-ring aircraft must be equipped with vertical fins, otherwise the wing ring cannot rotate. If no vertical fins are equipped, there also exists another problem that how the high-altitude power generation ring realizes the waist tying.

An existing saucer-type oppositely-pulling hovering-flight machine can obtain the horizontal thrust in an east-west direction only by hovering a windward area of each of opposite parties. However, it is necessary to sequentially deflect the fins or install a horizontal power device to obtain a driving force in a north-south direction. If a single fin is not deflected or no horizontal thrust device is installed, there also exits yet another problem that how the flying saucer with the wing rings obtains the driving force in the north-south direction.

The following technical solutions can completely solve the above technical problems.

**SUMMARY**

**Technical solution**

**I. Technical solution of "Low energy consumption high-speed flight method"**

**Overall scheme:** This flight method is a way to make a flying saucer with wing rings to obtain the horizontal thrust, and is also the low energy consumption high-speed flight method. Specifically, this flight method enables the wing rings to axially tilt, so that an orientation of overall lift force of the wing ring is a tilt direction. The lift force is partially converted into the horizontal thrust. In this way, this high-speed flight with low energy consumption and low noise is achieved under the premise of no jet engine and no deflection of fins. The present disclosure can be applied to aircrafts or submarines (such as a saucer-type submarine, or a single power generation ring or a double-body oppositely-pulling power generation ring that is driven by ocean currents).

The phrase "the wing ring is axially tilted" refers to the overall deflection of the wing ring, rather than the deflection of a single fin inside the wing ring. The term "overall lift force of the wing ring" refers to a resultant force of the lift force generated by each fin of the wing ring.

**Technical principle**

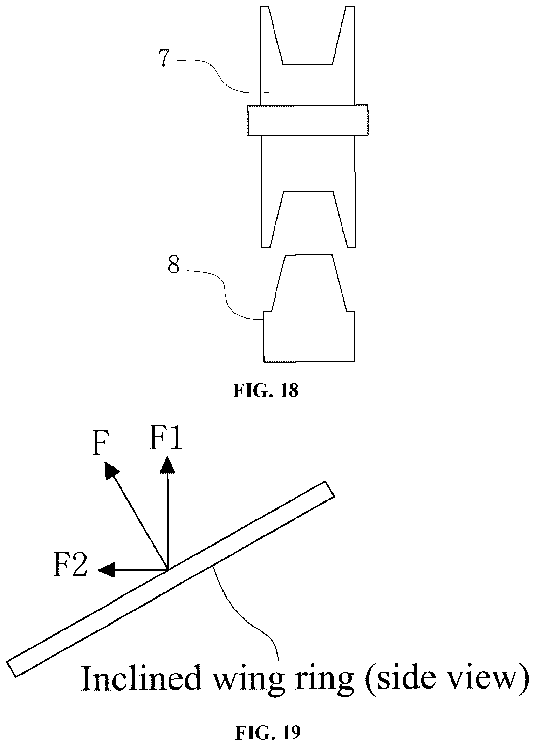

The center axis of each wing ring of the flying saucer with the wing rings is originally in a vertical direction, so the lift forces generated by all the fins of the wing ring form a vertical upward resultant force F (see FIG. 19). When the center axis of the wing ring tilts, the direction of the resultant force F is inevitably tilted accordingly, which inevitably generates a horizontal component force F2, i.e., the horizontal thrust.

When the axial directions of the wing rings tend to the forward direction of the flying saucer, the horizontal component force F2 points to the front to drive the flying saucer move forward. When the axial directions of the wing rings tend to the back of the flying saucer, the horizontal component force F2 points to the back, thereby forcing the flying saucer to brake and reverse. Since the flying saucer with the wing rings can hover in the air, there is no risk of braking or reversing. When the axial directions of the wing rings tend to the left or the right of the flying saucer's forward direction, the horizontal component force F2 may point to the left or the right, thereby driving the flying saucer to turn left or right.

The present disclosure provides a high-speed flight method with very economical, low energy consumption and low noise. This method is particularly applicable to the flying saucer with the wing rings, so that the large-size flying saucer with the wing rings can have a horizontal thrust equivalent to nearly thousands of large-size jet engines without being equipped with any jet engine.

For example, in a flying saucer equipped with 100 An-225 fins, the maximum lift force of the whole flying saucer theoretically is:

$$(100 \times 640 \text{ tons/fin}) = 6.4 \text{ (ten thousand tons)}.$$

Apparently, when the wing ring is deflected by 90 degrees in an axial direction (i.e., a vertical direction is changed into a horizontal direction), and the original vertically upward lift force is completely converted into the horizontal thrust.

Therefore, when the wing ring is deflected by 1° at each time, one-nineties lift force is converted into a horizontal thrust.

Therefore, each wing ring only needs to deflect by 2 degrees, and the horizontal thrust is as high as 1422.22 tons (i.e., 6.4 ten thousand tons multiply by 2 and divide by 90), which is about the thrust generated by 102 turbofans and 10 engines. If each wing ring is deflected by 20 degrees, the horizontal thrust will be as high as 14.22 thousand tons, which is equivalent to additionally installing 1020 turbofans and 10 engines (the thrust of the turbofan 10 is 132 KN, which is about 14 tons).

Apparently, it is impossible for any existing aircraft to have hundreds or thousands of aero-engines. Even if aero-engines are installed at all costs, there is no enough lift force to carry so many aero-engines.

Since all the engines in the ring power system of the flying saucer with the wing rings drive the same rigid ring to rotate, it is not necessary to ensure that all the engines work normally at the same time. Even if most engines cannot work normally, the biggest bad result is only limited to slowing down the rotation of the wing ring and reducing the lift force and the flight speed. A redundant engine is initiated. If necessary, the flying saucer with the wing rings only needs to be equipped with a power cut-off device, and the flying saucer with the wing rings can immediately switch to the autogyro mode when all the engines are suffered the trouble and are stopped, so as to ensure the slow and safe landing.

Since the standard take-off airspeed of a large passenger aircraft and a large transport airplane ranges from 268.54 km/h to 287.06 km/h, the flying saucer with the wing rings can take off smoothly, as long as the linear speeds of wings on large wing ring reach this airspeed. As long as the flying saucer with the wing rings can take off smoothly, when the wing ring is deflected and the orientation of the lift force thereof is to be the tilt direction, the flying saucer with the wing rings will inevitably obtain the horizontal thrust sufficient for the flying saucer to fly at high speed. The current maximum operating speed of China Beijing-Shanghai high-speed railway has reached 486.1 km/h. The maximum test speed of a test train with 500 km/h developed by CSR (China South Locomotive & Rolling Stock Corporation Limited) has reached 605 km/h. A rail guide vehicle with the ring coupler of the wing ring mechanism runs in a laboratory environment, and the operating conditions are far better than that of the test train. Furthermore, the ring coupler is a horizontal rigid ring, and the wheel group of the rail guide vehicle is completely coupled with the rail, so that there is no possibility of derailment and rollover. Therefore, the existing technical conditions are_enough to enable the flying saucer with the wing rings to fly at high speed.

The jet engine of flying saucer with the wing rings can be completely replaced with an electric motor, a turboshaft engine or an internal combustion engine, and the rotating wing ring mechanism essentially is a ring high-speed railway with no compartment and having wings, which is running on a ring track at high speed. So, even if the turboshaft engine is used, the ability of the flying saucer is also much higher than that of a traditional helicopter and a jet aircraft. If the electric motor and the internal combustion engine are used, the ability of the flying saucer is higher and the energy consumption thereof is lower. Therefore, the present disclosure is not only a high-speed flight method, but also a low energy consumption high-speed flight method.

Since the jet engine often accounts for about one-thirds total cost of the aircraft, and the jet engine has a much shorter service life and much higher inspection and maintenance cost, the aircraft cost and the inspection and maintenance cost is greatly reduced by replacing the jet engine with the electric motor, the internal combustion engine or the turboshaft engine. The flying saucer with the wing rings can take off and land vertically and hover in the air, there is no needs to spend a lot of airport construction and maintenance fees, so that the overall operating cost of the flying saucer with the wing rings will be much less than that of a traditional aircraft.

**Technical effects:**

(I) There is no needs to equip with the jet engine to realize the flight actions such as forwarding, left and right turning, braking and reversing. Furthermore, the structure is simpler compared with sequential deflection of a single fin. Moreover, the deflection mechanism does not need to move circularly along with the wing ring, which is more conducive to simplification of small-size flying saucer with the wing rings (especially an airplane model of the flying saucer with the wing rings and flying saucer toys).

(II) Huge horizontal thrust can also be generated, so that the large-size flying saucer with the wing rings can achieve the high-speed flight with low energy consumption and low noise.

(III) Since no fins are deflected, the attitude of the wing ring is always unchanged, the gyro effect is stronger, and the ability of strong wind resistance and overturn resistance is higher.

(IV) This kind of flying saucer is the best choice for future urban traffic due to its low energy consumption, low noise and the strong wind resistance and the overturning resistance.

(V) The high-altitude power generation ring and the oppositely-pulling hovering-flight machine can easily realize the waist tying thereof, so that the operation for enabling the wing ring to rotate windward becomes simple and easy.

**II. Technical solution of "Wing ring mechanism"**

Overall scheme: the wing ring mechanism includes a wing ring, a wing-ring rotating assembly, and wing-ring deflecting members, where each of the wing-ring deflecting members includes a telescopic member and movable connecting members; the telescopic member is one of a hydraulic telescopic rod, a pneumatic telescopic rod, a spiral telescopic rod, a rack telescopic rod, a folding telescopic rod, an inflatable airbag or another member that is reciprocated to change a distance between two ends thereof.

The function of the telescopic member is to force the wing-ring rotating assembly to deflect, so that the wing ring originally parallel to the wind direction or in the advancing direction is deflected, so as to enable the tilt surface thereof to be toward the wind direction or the advancing direction, thereby realizing the rotation or generating the horizontal thrust.

The movable connecting members can be arranged at one or two of three positions, i.e., two ends and the middle section of the telescopic member, and specifically may be arranged at one position, two position or three positions. A rotating pair, a sliding pair or other movable connectors may be specifically selected in positions based on whether they can play the following two roles at the same time after being combined with the telescopic member: first, they can transmit the thrust from the telescopic member to enough cause the wing ring to deflect; second, there avoids the mutual resistance caused by the change in an included angle between the wing-ring rotating assembly and the telescopic member. When the telescopic members perform the telescopic motions to deflect the axial directions of both the wing ring and the wing-ring rotating assembly, the movable connecting members should be able to move, rotate, bend or have other adaptive changes accordingly to achieve the purpose of avoiding a mechanical damage.

The wing ring is the abbreviation of a ring wing wheel, and is a wing wheel that is connected to a ring truss and supports fins, such as a ring rotor, a ring wind wheel, a ring gas wheel, a ring water wheel, and a ring propeller.

The wing-ring rotating assembly has two parts that cannot be separated and can rotate relative to each other (the two parts rotate in opposite directions or asynchronously rotate toward the same direction; or one part is stationary and the other part rotates). At least one of the two parts is connected to one wing ring.

In addition to a coupling ring of the rail, the wing-ring rotating assembly can also select a non-wheel coupling ring. The former completely relies on a wheel to realize three functions of loading, driving and coupling, whereas the latter realizes the three functions without relying on the wheel completely or partly. Therefore, the non-wheel coupling ring cannot be un-equipped with wheels, and cannot only use an electromagnetic principle or a superconductivity principle. The most typical non-wheel coupling ring has a magnetic levitation coupling ring and a magnetic drive coupling ring. That is, the non-wheel coupling ring is a ring that relies on the principle of repulsion of two poles of a permanent magnet or an electromagnet or the superconductivity principle to achieve one or both of levitation and driving.

Any one of a rail ring and a frame ring of the coupling ring of the rail or the levitation coupling ring is fixedly connected with the wing ring to form a complete wing ring mechanism. A part of one wing ring mechanism that does not rotate along with the wing ring is connected with a part of the other wing ring mechanism that does not rotate synchronously along with the wing ring, so as to form a wing ring mechanism with two wing rings. More details of the wing ring mechanism can be found in Luo Conggui's patent specification and paper on a wing-ring aircraft.

**Preferred solution I:** According to the overall solution, the movable connecting members are located at two or three of portions including the two ends and the middle section of the telescopic member.

**Preferred solution II:** According to the general solution, each of the movable connecting members belongs to or includes a rotating pair, a sliding pair or a bendable member. The bendable member may be able to replace the function of the moving pair.

**Preferred solution III:** According to preferred solution II, the rotating pair allows the telescopic member or the wing-ring rotating assembly to deflect or swing in more than two directions.

**Preferred solution IV:** According to preferred solution II, the sliding pair enables the telescopic member to move in a horizontal direction (it is assumed that the ring surface is in a horizontal state before the wing ring is deflected).

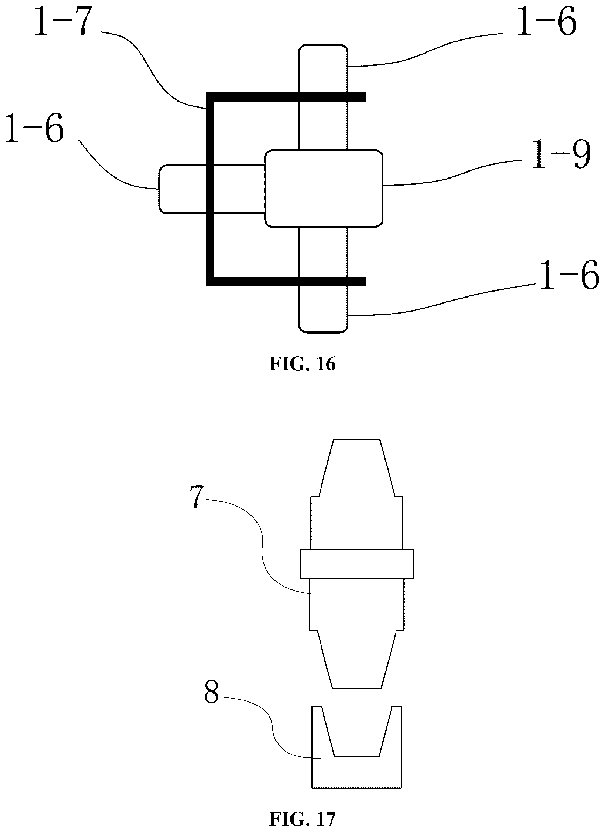

**Preferred solution V:** According to the overall solution, the cross section of the circular rail of the wing-ring rotating assembly is concavely trapezoid or convexly trapezoid, and the circumference (i.e., a rolling surface in contact with the rail) of the wheel coupled with the circular rail is correspondingly convexly trapezoid or concavely trapezoid (as shown in FIG. 17 or FIG. 18).

The advantages of this solution are as follows. The structure of the coupling ring of the rail is simple, the cost thereof is low, and the weight thereof is low, which is particularly suitable for smaller flying saucers, especially flying saucer airplane toys.

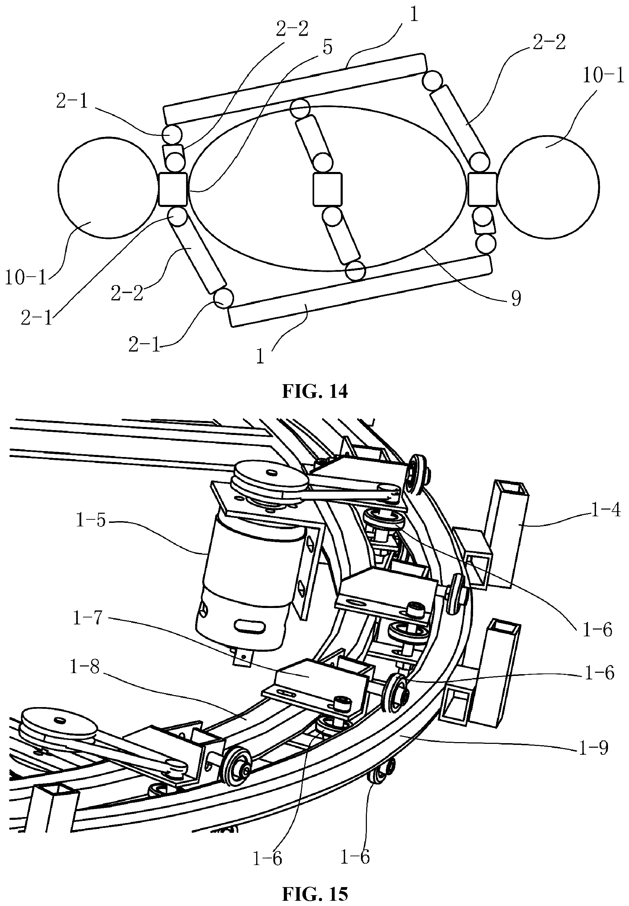

**Preferred solution V:** According to the overall solution, the wing-ring rotating assembly has a wheel group arranged into an isosceles triangle shape, and the wheels in an isosceles triangle array surround the rail from three directions, so as to be coupled with the rail. An opening of the isosceles triangle shape can face toward the outside of the circle (as shown in FIG. 15 and FIG. 16), or face toward the inside of the circle.

### Technical Principle

First, the principle of enabling the flying saucer with the wing rings to advance, turn or reverse can be found in the "technical principle" of the technical solution of " Low energy consumption high-speed flight method" herein.

Second, the high-altitude power generation ring and the oppositely-pulling hovering-flight machine may be initiated the telescopic members after rising to a predetermined height through the disclosure, so as to deflect the wing ring as a whole, so that the wing ring can be inclined to face the wind to rotate by the wind.

### Beneficial effects

Details are with reference to the "Beneficial effects" of " the technical solutions for Low energy consumption high-speed flight method" herein.

### III. Technical solution "Flying saucer with wing rings"

**Overall solution:** The flying saucer with the wing rings is an aircraft or submarine that uses the wing ring mechanism as a lift device. The wing ring mechanism is the "Wing ring mechanism" mentioned above, or another one wing ring mechanism that can deflect the wing ring.

The flying saucer with wing rings that has an outer ring cabin is also actually a ground-effect aircraft, which can fly in a near-horizontal manner, and can take off and land vertically, which is very convenient for the takeoff and the landing on the water surface. As long as waterproof measures are taken, the flying saucer with the wing rings can levitate and submerge, which is a very convenient transportation tool in the aerial, the water surface, and in the underwater.

**One of the preferred solutions:** According to the overall solution, a ring cabin, a saucer-type cabin, a mesh cabin, a cross-shaped cabin, a radial cabin, or other types of cabins are included.

The radial cabin refers to a cabin with a body in a direction parallel to or overlapping with the diameter or a radius of the wing ring or the wing-ring rotating assembly. The mesh cabin is formed by intersecting two radial cabins having different arrangements. The number of radial cabins in each arrangement is greater than 1. The "intersection" includes two intersection ways, i.e., perpendicular intersection or non-perpendicular intersection. The mesh cabin and the radial cabin are not only conducive for the passage of the vertical airflow, but also beneficial to the lightweight of the flying saucer and conducive to the construction of an open high-altitude platform.

### IV. Technical solution of "High-altitude power generation ring":

The high-altitude power generation ring is a high-altitude wind power generation device having the wing ring mechanism and cables. The wing ring mechanism is connected to an upper end of each of the cables, and a lower end of each of the cables is connected to a ground tie point. The wing ring mechanism is the "Wing ring mechanism" mentioned above. The upper end of the cable is connected to a part of a side portion of the wing ring mechanism that is not rotated along with the wing ring.

An aerostat refers to a device or an object that has no support or engine and is suspended in the air.

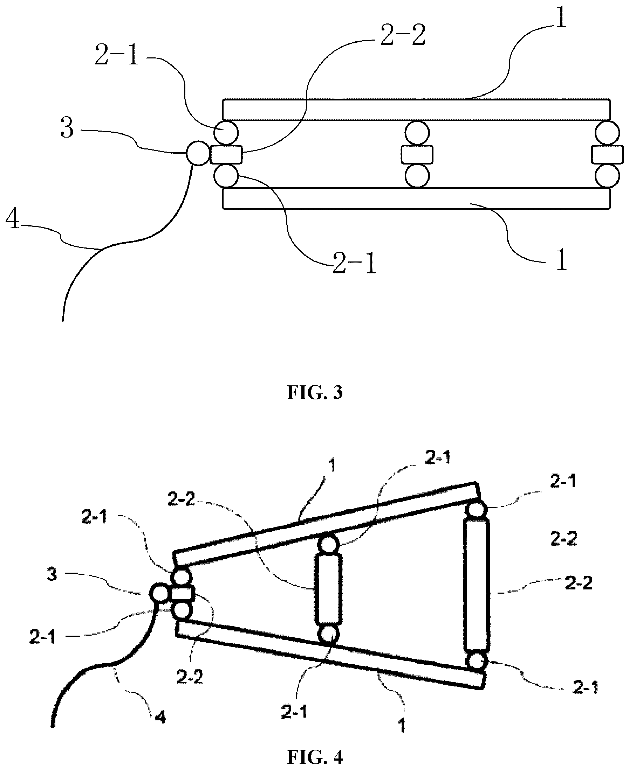

As the aforementioned "Wing ring mechanism" and "Flying saucer with wing rings" are used, the upper end of the cable can be connected to the wing ring mechanism or the side of the flying saucer with the wing rings (as shown in FIG. 3, FIG. 4, and FIG. 5). Therefore, only one remote control device needs to be configured and can remotely activate the telescopic members after the wing ring mechanism or the flying saucer rises to a predetermined height, so as to deflect (tilt) the wing ring as a whole, so that the wing ring rotates obliquely toward the wind.

Like the previous high-altitude power generation ring, the high-altitude power generation ring can operate in high-altitude or low-altitude wind, and the best operating position is a high-altitude stratosphere.

The present disclosure has the advantages as follows. The cable can be connected to the side of the power generation ring without equipping with vertical fins or deflection mechanisms for a single fin, thereby greatly improving the convenience of operation.

## V. Technical solution of "Oppositely-pulling hovering-flight machine":

**Overall solution:** There is two or two sets of aerostats or aircrafts are respectively located in two airflows, a wind direction of one of the two airflows being opposite to another wind direction of another one of the two airflows, the two or two sets of aerostats or aircrafts are connected through a connector (such as cables, connecting rods or brackets) that can prevent the aerostats or aircrafts from being separated from each other. At least one of the two or two sets of aerostats or aircrafts belongs to "Wing ring mechanism" mentioned above or "Flying saucer with wing rings" mentioned above.

**Preferred solution I:** According to the general solution, the connector that can prevent the aerostats or aircrafts from being separated from each other includes cables, connecting rods or brackets, and the number of cables, connecting rods or brackets is not less than 2. Moreover, there are at least two cables and at least two connecting rods or at least two brackets. The upper ends of the at least two cables are respectively connected to both sides(rather than the position at the central axis) of one of the two aerostats or aircrafts that is in an upper one of the two airflows, the upper ends of the at least two connecting rods are respectively connected to both sides(rather than the position at the central axis) of one of the two aerostats or aircrafts that is in an upper one of the two airflows; or the upper ends of the at least two brackets are respectively connected to both sides (rather than the position at the central axis) of one of the two aerostats or aircrafts that is in an upper one of the two airflows. And the lower ends of the at least two cables are respectively connected to both sides (rather than the position at the central axis) of an other center axis of one of the aerostats or aircrafts that is in a lower one of the two airflows.

## Beneficial effects and technical principle

The oppositely-pulling hovering-flight machine is purely a wind aircraft, which can realize the oppositely pulling just by the upper and lower airflows (such as an east airflow and a west airflow of the stratosphere) of the opposite-wind group at high altitude without equipping with a power device, so as to hover or cruise at a high-altitude fixed point all the year round. Furthermore, the high-altitude wind power can be used to generate electricity steadily during hovering or cruising. In the present disclosure, after the wing ring mechanism or the flying saucer with the wing rings, which is used as two oppositely-pulling aerostats or one oppositely-pulling aerostat, rises to the east airflow or the west airflow to be a set height, only the telescopic members need to be directly initiated to deflect the wing ring, so as to tilt the wing ring to face the wind. And then the power input is stopped to the motor; the wind in turn drives the wing ring to rotate to continually maintain the lift force; and the rotating wing ring is used to push the motor to continually rotate, so as to output current.

In the wing ring mechanism or the flying saucer with the wing rings of the present disclosure, when the wing ring changes from the active rotation to the wind-driven rotation, there is no need neither to additionally install and activate vertical fins, nor to deflect the axis of the whole machine (so, the cabin of the flying saucer with the wing rings is always kept in the horizontal state). Thus, the overall structure and operating procedures have been greatly simplified, and the flight stability has also been enhanced.

Especially in the preferred solution, the horizontal thrust in a north-south direction can be obtained only by adjusting the orientation of the slope of the wing ring, and the free cruising in all directions can be realized without installing and initiating any engine that provides the thrust in the north-south direction. At the same time, the strength of the connector and the flight stability of the aerostats or aircrafts in two different airflows are enhanced.

Like the various oppositely-pulling hovering-flight machines previously, the oppositely-pulling hovering-flight machine of this solution can obtain the horizontal thrust in the east-west direction only by adjusting the windward area of each of the two oppositely-pulling parties. The solution only needs to adjust included angle between the ring surface of the wing ring of each of the two oppositely-pulling parties and a horizontal plane, so that the two parties may be subjected to the different wind pressures, and the whole machine may be moved along the wind direction of one party which has a larger wind pressure.

**Principle for the horizontal thrust in the north-south direction and an acquisition method** are known from "Use method and principle of this example" in Example IV of "Embodiments". The whole machine (a member composited by two aerostats) can sail freely in any direction by only adjusting the forces of the whole machine which are in the east-west direction and the north-south direction.

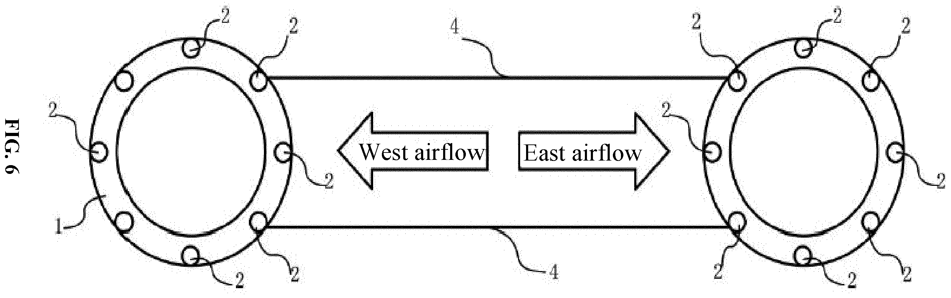

**Use method and principle of this example (as shown in FIG. 6)**

By controlling telescopic rods 2-2, the ring surface of at least one wing ring of the high-altitude power generation ring in the east airflow tilts to the southeast, and the ring surface of at least one wing ring of the high-altitude power generation ring in the west airflow tilts to the southwest. So, a resultant force pointing to the north can be obtained, which is the northward horizontal thrust of the whole machine.

Originally, when the wing rings of both parties tilt to the south, the wind may enable the two power generation rings to generate two torques in opposite directions respectively, so that the cable tie points on the normal side may tend to move backward. However, because the two cables on the north and the south are always tight, the two cable tie points on the north side are pulled against each other through the cables on the north side, which counteracts the backward torque. Therefore, the two cable tie points of the two power generation rings are still kept side by side (i.e., their connection lines are perpendicular to the wind direction). Therefore, the torques obtained by the wing rings of two parties that respectively tilt to the southeast and southwest may form a northward resultant force.

In the same way, as long as the wing rings of the two parties tilt to the northeast and northwest respectively, the horizontal and southward thrust may be obtained.

On the basis of obtaining a driving force in the north-south direction, if the tensile forces of the east and west parties are balanced, the whole machine inevitably cruises in a due south direction or a due north direction. If the tensile forces of the east and west parties are unbalanced and the power in the north-south direction is comprehensively controlled, the whole machine inevitably cruises in the southeast, southwest, northeast, northwest and other directions. Therefore, this machine can realize the free cruising in all directions.

**BRIEF DESCRIPTION OF THE DRAWINGS**

I. Drawing numbers and drawing names

FIG. 1 is a schematic structural diagram of a wing ring mechanism (side view);
FIG. 2 is a schematic structural diagram of a wing ring mechanism (top view);
FIG. 3 is a schematic structural diagram of a high-altitude power generation ring (side view);
FIG. 4 is another schematic structural diagram of a high-altitude power generation ring (side view);
FIG. 5 is a schematic structural diagram of a oppositely-pulling hovering-flight machine (side view);
FIG. 6 is a schematic structural diagram of a oppositely-pulling hovering-flight machine (top view);
FIG. 7 is a schematic structural diagram of a flying saucer with wing rings (top view);
FIG. 8 is a schematic structural diagram of a flying saucer with wing rings (side view);
FIG. 9 is another schematic structural diagram of a flying saucer with wing rings (top view)
FIG. 10 is yet another schematic structural diagram of a flying saucer with wing rings (top view);
FIG. 11 is another schematic structural diagram of a flying saucer with wing rings (side view);
FIG. 12 is a sectional diagram of a flying saucer with wing rings (taken along a diameter of the flying saucer);
FIG. 13 is a schematic structural diagram of a flying saucer with wing rings (side view);
FIG. 14 is another schematic structural diagram of a flying saucer with wing rings (side view);
FIG. 15 is a partially enlarged view of a rail coupling ring with a wheel group of an isosceles triangle shape;
FIG. 16 is a cross-sectional view of a wheel and a rail after being coupled;
FIG. 17 is a cross-sectional view of coupling a wheel and a rail;
FIG. 18 is another cross-sectional view of coupling a wheel and a rail; and
FIG. 19 is a schematic diagram showing a principle of generating the horizontal thrust by the deflection of a wing ring (schematic side diagram).

II. Reference signs in the drawings:

1: wing ring mechanism; 1-1: wing ring; 1-2: rail coupling ring; 1-3: fin; 1-4: fin support; 1-5: motor; 1-6: wheel; 1-7: wheel frame; 1-8: frame ring; 1-9: rail ring; 2: wing-ring deflecting members; 2-1: rotating pair; 2-2: telescopic rod; 3: cable tie point; 4: cable; 5: sliding pair; 6: moving pair; 7: axial section of wheel; 8: cross section of rail; 9: center cabin; 9-1: radial section of center cabin; 10: outer ring cabin; 10-1: radial section of outer ring cabin 10; 11: radial cabin; 11-1:

radial section of radial cabin.

## DETAILED DESCRIPTION OF THE EMBODIMENTS

**Example I:**

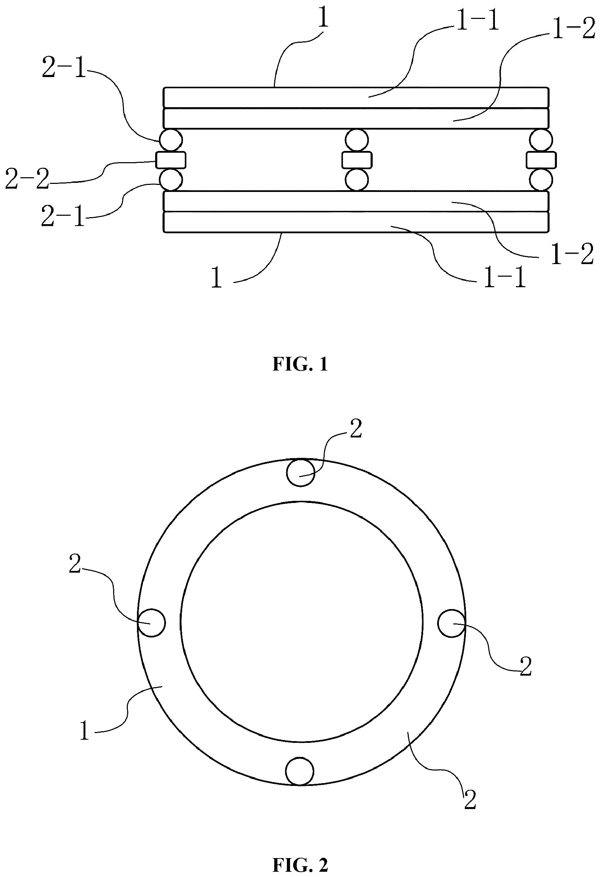

This example is a wing ring mechanism including an upper wing ring mechanism 1 and a lower wing ring mechanism 1. Each wing ring mechanism 1 of FIG. 2 encloses wing rings 1-1 and rail coupling rings 1-2 shown in FIG. 1. Each of wing-ring deflecting members 2 of FIG. 2 includes a telescopic rod 2-2 and two rotating pairs 2-1 shown in FIG. 1, and the two rotating pairs are at two ends of the telescopic rod. In this example, each rotating pair 2-1 may enable the equipped telescopic rod 2-2 to swing in two mutually perpendicular directions, and one of the directions overlaps the diameter of the wing ring.

In addition, each telescopic rod 2-2 needs to be provided with a remote control switch to remotely control the telescopic rod, so as to perform the telescopic motion and control an extending length of the telescopic rod. The rail coupling rings 1-2 in this example can also be replaced with a magnetic levitation coupling ring or another type of wing-ring rotating assembly (all the examples below are the same).

**Example II**

Each wing ring mechanism 1 in FIG. 3 and FIG. 4 is the same as the wing ring mechanism 1 in FIG. 1, including the wing ring 1-1 and the rail coupling rings 1-2. This example undergoes the following settings on the basis of Example I.

The two rail coupling rings 1-2 are respectively provided with several motors capable of being freely switched to a motor mode or a power generation mode. All the motors are in a circular array, and each motor is in power connection with one wheel.

A cable tie point 3 is provided at a part of any telescopic rod 2-2 that does not perform the telescopic motion, and a lower end of a cable 4 is connected to a ground tie point.

An electric cable is arranged in the cable 4. An upper end of the electric cable is connected with the motor via a circuit.

In addition, for the lower wing ring (i.e., the wing ring included in the lower wing ring mechanism 1), each fin needs to be equipped with an angle-of-attack deflection device for the fin.

Use method of the high-altitude power generation ring is as follows. Power is transmitted to the electric motor to enable the electric motor to drive the wing rings to rotate, so as to lead the whole aircraft to rise up into air. After the aircraft reaches a set height, the other three telescopic rods 2-2 are firstly remotely controlled to extend to deflect the two wing rings as a whole, so that ring surfaces tilt to face the wind (as shown in FIG. 4). At the same time, the angle-of-attack deflection device- for the fin in the lower wing ring are operated to adjust the angles-of-attack of all the fins to negative values (if the original angle-of-attack is $\alpha$ degrees, it is adjusted to - $\alpha$ degrees), so that wind naturally drives the lower wing ring to rotate. Then, the power is cut off, so that high-altitude strong wing drives the wing ring to rotate, thereby maintaining the lift force and driving the power generator to generate power.

The extending length of each telescopic rod 2-2 shall be set as follows. The telescopic rod 2-2 provided with the cable tie point 3 shall not extend out completely, and even this telescopic member can be replaced with an ordinary connecting rod. Assuming that the extending length of another one telescopic rod 2-2 which is located in the same radial direction, is L, the extending lengths of another two telescopic rods 2-2 in a direction perpendicularity to the radial direction may be half of L.

**Example III:**

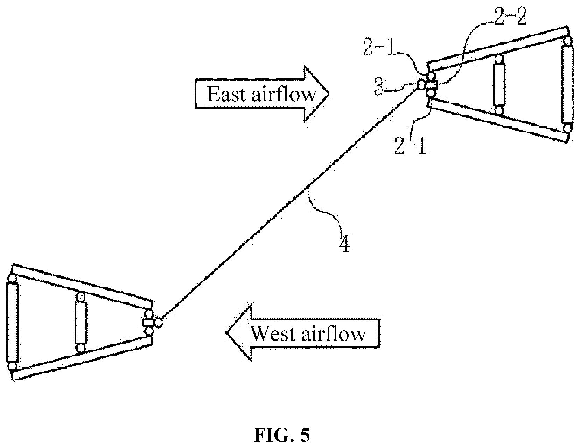

Two high-altitude power generation rings described in Example II are taken, and their cables are connected to form a set of high-altitude oppositely-pulling power generation rings that do not require a ground traction cable to provide tensile forces. Furthermore, the high-altitude power generation rings essentially are the oppositely-pulling hovering-flight machine that are able to hover on top of the stratosphere or troposphere for a long time or cruise in the east-west direction (FIG. 5).

**Use method:**

The two high-altitude power generation rings are initiated successively, so that they respectively enter the east airflow and the west airflow of the stratosphere (or the east airflow and the west airflow on the top of a trade-wind zone). After the cables of the high-altitude power generation rings are strained, the operation method described in Example II is initiated to enable the attitudes of the high-altitude power generation rings to be as shown in FIG. 5. The tensile forces of the east and west parties can be adjusted by adjusting opening angles. When the contra tensile forces of the two parties reach a balance, the whole aircraft will hover. When the contra tensile forces of the two parties are out of balance, the whole aircraft will cruise to east or to west.

**Example IV:**

One or more cables 4 are added for the cable rope in Example III (as shown in FIG. 6).

The advantage of this example is that power that is along the north-south direction can be generated, so that really free cruising in all directions can be realized without deflecting the individual fins in turn.

It should be noted that, the telescopic rod 2-2 provided with the cable tie point 3 can be replaced with the ordinary connecting rod without a telescopic function in Example III, whereas this telescopic rod is not replaced with the ordinary connecting rod in this example. Otherwise, the wing rings may not be deflected to the north and south sides.

The method and the principle used in this example (see "Beneficial effects and Technical principles" of the technical solution "Oppositely-pulling hovering-flight machine" for details.

**Example V:**

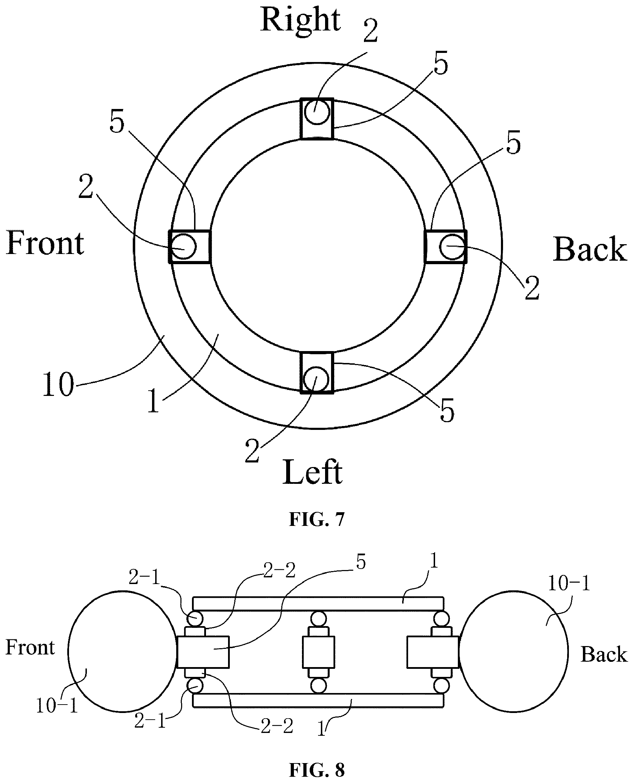

As shown in FIG. 7, FIG. 8, and FIG. 9, each wing ring mechanism 1 includes a set of wing ring 1-1 and a set of rail coupling ring 1-2 at the corresponding position in FIG. 1.

In this example, on the basis of Example I, outer ring cabins 10 are first added to form a flying saucer with wing rings. As shown in FIG. 7, the outer ring cabin 10 is connected to the wing ring deflecting members 2 through a sliding pair 5 (also as shown in FIG. 8, connected to a telescopic member 2-2 in a center portion of the wing ring deflecting member 2). It can be seen that there must be a movable connection between the wing-ring deflecting members 2 and the outer ring cabin 10. This is different from Example I.

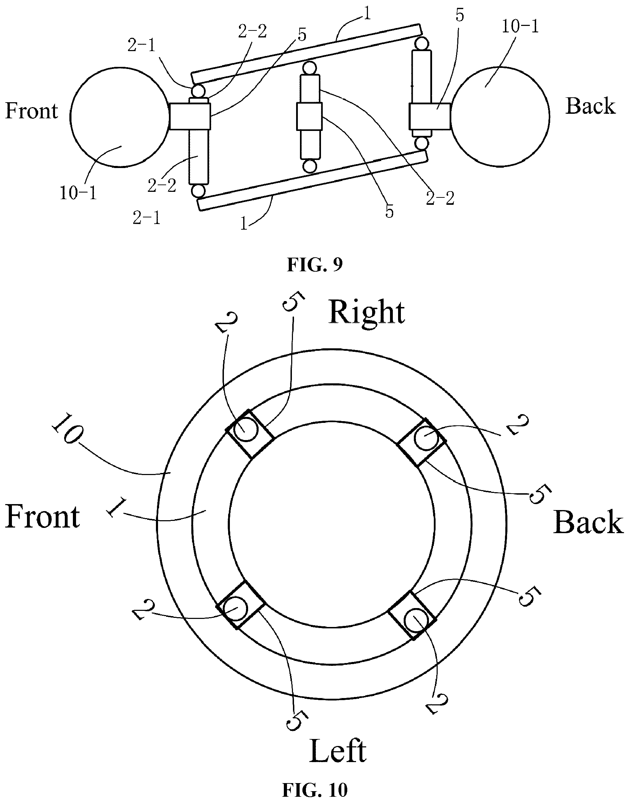

When the flying saucer needs to move forward, only the front and rear telescopic rods 2-2 need to be manipulated to extend in opposite directions (as shown in FIG. 9). At this time, the front and rear telescopic rods 2-2 may be close to each other. This is the reason that the wing-ring deflecting members 2 must be movably connected to the outer ring cabin 10. Otherwise, the telescopic rods 2-2 will be restricted by the cabin and cannot move. At this time, the two telescopic rods on the left and right do not need to slide, that is, the two ends of each telescopic rod extend the same length, so as to adapt to the deflection of the wing ring mechanism 1. The sum of the extending lengths of two ends is equal to the extending length of each of the front and rear telescopic rods 2-2.

If the flying saucer needs to turn left or right in the advancing or reversing process, the left or right telescopic rod 2-2 are manipulated to extend upward, so that the wing ring tilts to the left or right.

**Regard setting of the rotating pair in this example:**

If the flying saucer only needs the horizontal thrust for advancing or reversing, all the rotating pairs 2-1 only need to be able to deflect in the forward and backward directions. If the flying saucer needs to turn left or turn right, all the turning pairs 2-1 must also be able to deflect to the left or the right. If the left and right telescopic rods 2-2 need to directly extend and retract without adaptively and telescopically adjusting the front and rear telescopic rods 2-2, the rotating pairs 2-1 can be made to deflect not only along two mutually perpendicular axial directions, and can be made to deflect along more axial directions (universal rotating pairs like bowl-shaped bearings are preferred).

Additional description:

In this example, when the flying saucer needs to move forward or backward, it is not necessary to enable two or two sets of telescopic rods 2-2 to extend at the same time, as long as one or a set of telescopic rods 2-2 extend upwards (the horizontal thrust may be reduced by half).

In this example, any two telescopic rods 2-2 along opposite telescopic directions, upper and lower portions of each of which are opposite, can also be integrated into one part. In that case, both ends must move synchronously (when one end extends a certain length, the other end must retract by the same length). However, in case of such setting, an enough retraction space must be left for both ends. Otherwise, the two ends must be restricted to each other and cannot extend or cannot extend to a sufficient length.

**Example VI:**

On the basis of Example V, the front, rear, left and right directions of the flying saucer with wing rings are adjusted to the orientations shown in FIG. 10.

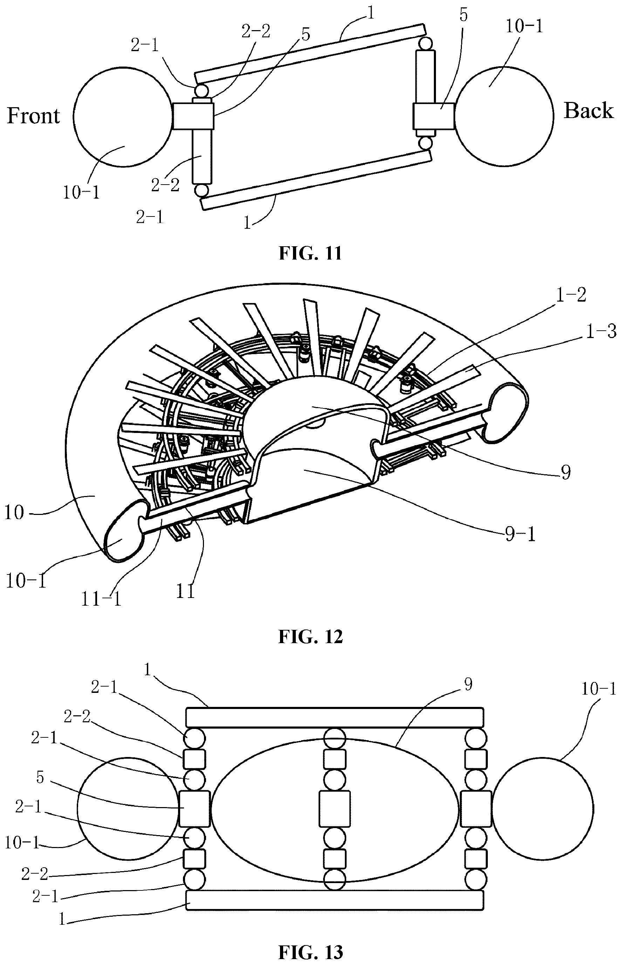

When the flying saucer needs to move forward or backward horizontally, only the front and rear sets of telescopic rods 2-2 are manipulated to perform a corresponding telescopic motion. If the flying saucer requires the horizontal thrust for turning left or turning right, only the left and right sets of telescopic rods 2-2 are manipulated to perform a corresponding telescopic motion (as shown in FIG. 11).

**Example VII:**

On the basis of the wing ring mechanism of Example I, a center cabin 9, an outer ring cabin 10 and a radial channel cabin 11 are added to make the wing ring mechanism to be a flying saucer with wing rings (as shown in FIG. 12, FIG. 13 and FIG. 14).

The biggest difference between this example and Examples V and VI is that, the wing-ring deflecting members 2 and the cabins are fixedly connected and cannot move relatively with each other. Any two telescopic rods 2-2 along opposite telescopic directions, upper and lower portions of each of which are opposite, cannot be integrated to one part or are always kept on the same axis up and down like that in Example V or Example VI. Any telescopic rod 2-2 will inevitably swing when the telescopic rod performs a telescopic motion. Therefore, the setting of the rotating pair may be adapted to swing requirements for the telescopic rods (as shown in FIG. 14).

The matters that must be paid attention to during setting the rotating pairs 2-1 in this example and the above examples can be seen in Example VIII.

**Example VIII:**

In all the above examples, the number of telescopic rods 2-2 is not greater than 4. However, if the diameter of the wing ring mechanism is relatively large, more telescopic rods 2-2 need to be added to provide the thrust and the stability required for the wing ring deflection. After the telescopic rods 2-2 are added, all the telescopic rods 2-2 are preferably still in a circular array. For each added telescopic rod 2-2, the extending length thereof is equal to half of the sum of the extending lengths of the two telescopic rods 2-2 that are closest to the added telescopic rod on the same circumferential line. As for the setting of movable connecting members, it is more complicated. Examples I and V involve the setting respectively. Setting the rotating pair is further taken as an example only here.

When the number of telescopic rods 2-2 is equal to 4, Example V, Example VI and Example VIII are preferred.

When the number of telescopic rods 2-2 is greater than or less than 4, and the number of telescopic members is assumed to be N, if N is a singular number, the number of deflection axial directions of the rotating pairs (or a rotating pair group) configured for each telescopic member should not be less than N (because the telescopic member needs to swing in N directions). If N is an even number, the number of deflection axial directions of the rotating pairs (or a rotating pair group) configured for each telescopic member should not be less than $N \div 2$ (the telescopic member only needs to swing in $N \div 2$ directions). Only when N is 2, the situation is more special. If the swing directions of two telescopic members are the same or parallel, then the number of deflection axial directions of the rotating pairs (or a rotating pair group) configured for each telescopic member only needs to be not less than 1. If the swing directions of the two telescopic members are intersecting (for example, the two telescopic members alternately expand and retract, instead of synchronous expansion and retraction), the number of deflection axial directions of the rotating pairs (or a rotation pair group) configured for each telescopic member should not be less than 2.

The flying saucer with wing rings must have horizontal thrusts in four directions including an advancing direction, a reversing direction, a left turning direction and a right turning direction. Therefore, the wing ring mechanism must have at least 3 telescopic members. However, except for very small flying saucers such as toys or airplane models, 4 or more telescopic members are appropriate due to the thrusts in the four directions easily being controlled by 4 telescopic members. Furthermore, 4 telescopic members can ensure the power and stability required for the deflection of the wing rings, and the four telescopic members should be appropriately in a circular array. Therefore, each configured rotating pair must be able to rotate around two mutually perpendicular axes in a reciprocating manner.

However, large and medium-size wing ring flying saucers require 6 or more telescopic members for their wing ring mechanisms due to their large diameters. The actual number is sufficient to ensure the thrust and stability required for the wing ring deflection.

**Example IX:**

On the basis of Example I to Example VII, the rail coupling rings are modified as follows. As shown in FIG. 15 and FIG. 16, the wheel group is changed to a wheel group in an isosceles triangle array, and wheels in the isosceles triangle array surround and couple with the rail in three directions. The opening of the isosceles triangle shape can be toward either the left or the right, whereas it is not convenient if the opening is upward or downward.

**Example X:**

On the basis of Example I to Example VII, the rail coupling rings 1-2 are modified. The wing ring mechanism 1 in Examples II to VII includes rail coupling rings 1-2 and wing rings 1-1 (such as the rail coupling rings 1-2 and the wing rings 1-1 in FIG. 1 of Example I). The specific modification is to replace the circular rail formed by the rail coupling rings with a rail having a concavely or convexly trapezoid cross-section. A circumference (that is, a rolling surface in contact with the rail) of each of the wheels is correspondingly replaced with a shape of a convexly trapezoid or concavely trapezoid (the rail and the wheels are as shown in FIG. 17 and FIG. 18).

The advantage of this example is that only one wheel on one section can realize the coupling and the torque transmission. The structure is simple, the cost is low, and the self-weight is small. It is especially suitable for smaller flying saucers, especially toy flying saucer airplanes.

**Example XI:**

On the basis of Example V, Example VI, and Example VII, waterproof measures should be taken to prevent the flying saucer with wing rings from sinking when the flying saucer is landed on the water surface. Airbags with the shapes consistent with projection shapes of cabins can also be added at the bottoms of the various cabins of the flying saucer, and are equipped with rapid inflating and exhausting devices, so as to increase the buoyancy when the load is too heavy.

**Example XII:**

On the basis of any kind of flying saucer with wing rings, waterproof measures are taken, and an angle-of-attack deflection device is added for each fin (particularly, each fin of the lower wing ring). Furthermore, the angle-of-attack deflection device must be able to make the fins to deflect to a sufficiently large negative angle-of-attack (to dive into the water to generate a downward thrust). If the submerging or the further dividing is needed, only the deflection degree of the lower wing ring needs to be increased to make the lower wing ring to dive partially into the water, and to make each fin (particularly, each fin of the lower wing ring) deflect to a sufficiently large negative angle-of-attack. Opposite operations are implemented when the flying saucer with wing rings needs to rise up or get out of water.

**Claims**

1.   A low energy consumption high-speed flight method, the flight method enabling a flying saucer with wing rings to obtain a horizontal thrust, wherein the flight method comprises tilting axially the wing rings to enable an orientation of an overall lift force of the wing rings to be a tilt direction, such that the lift force is partially converted into the horizontal thrust.

2.   A wing ring mechanism comprising wing rings, a wing-ring rotating assembly, and wing-ring deflecting members, wherein each of the wing-ring deflecting members comprises a telescopic member and movable connecting members; the telescopic member is one of a hydraulic telescopic rod, a pneumatic telescopic rod, a spiral telescopic rod, a rack telescopic rod, a folding telescopic rod, an inflatable airbag or another member that is reciprocated to change a distance between two ends thereof.

3.   The wing ring mechanism according to claim 2, wherein the movable connecting members are arranged at two or three of portions comprising the two ends and a middle section of the telescopic member.

4.   The wing ring mechanism according to claim 2, wherein each of the movable connecting members belongs to or comprises a rotating pair, a sliding pair and a bendable member.

5.   The wing ring mechanism according to claim 4, wherein the rotating pair enables the telescopic member or the wing-ring rotating assembly to deflect or swing in at least two directions.

6.   The wing ring mechanism according to claim 4, wherein the sliding pair enables the telescopic member to move in a horizontal direction.

7.   A flying saucer with wing rings, the flying saucer with the wing rings being an aircraft or a submarine that uses the wing ring mechanism as a lift device, wherein the wing ring mechanism is the mechanism according to claim 2, or another one wing ring mechanism that deflects other wing rings.

8. The flying saucer with the wing ring according to claim 7, wherein the flying saucer with the wing rings comprises one of a ring cabin, a saucer-type cabin, a mesh cabin, a cross cabin, a radial cabin or another cabin.

9. A high-altitude power generation ring, the ring being a high-altitude wind power generation device, and comprising a wing ring mechanism and cables, an upper end of each of the cables being connected with the wing ring mechanism, and a lower end of each of the cables being connected to a ground tie point, wherein the wing ring mechanism is the mechanism according to claim 2; and the upper end of each of the cables is connected to a part of a side portion of the wing ring mechanism that is not rotated along with the wing rings.

10. A oppositely-pulling hovering-flight machine, two or two sets of aerostats or aircrafts being respectively arranged in two airflows, a wind direction of one of the two airflows being opposite to another wind direction of another one of the two airflows, and the two or two sets of aerostats or aircrafts being connected by a connector that prevents the two aerostats or aircrafts from being separated from each other, wherein at least one of the two aerostats or aircrafts comprises the wing ring mechanism according to claim 2 or the flying saucer with the wing rings according to claim 7.

11. The oppositely-pulling hovering-flight machine according to claim 10, wherein the connector that prevents the two aerostats or the two aircrafts from being separated from each other comprises cables, connecting rods or brackets; and the cables comprise at least two cables, the connecting rods comprise at least two connecting rods, and the brackets comprise at least two brackets; upper ends of the at least two cables are respectively connected to two sides of a center axis of one of the two aerostats or the two aircrafts that is in an upper one of the two airflows; or upper ends of the at least two connecting rods are respectively connected to the two sides of the center axis; or upper ends of the at least two brackets are respectively connected to the two sides of the center axis; and lower ends of the at least two cables are respectively connected to another two sides of an other center axis of another one of the two aerostats or the two aircrafts that is in a lower one of the two airflows.

**FIG. 1**

**FIG. 2**

**FIG. 3**

**FIG. 4**

East airflow

2-2

2-1

3

2-1

4

West airflow

FIG. 5

**FIG. 6**

Right

Front

Back

Left

**FIG. 7**

Front

Back

**FIG. 8**

2-1   2-2   5        1        5   10-1

Front                                          Back

10-1   2-2              5   2-2

2-1        1

**FIG. 9**

2   5   Right

10

Front   1                    Back

2                    5

5   2

2

5   Left

**FIG. 10**

**FIG. 11**

**FIG. 12**

**FIG. 13**

**FIG. 14**

**FIG. 15**

1-7　　　　　　　　1-6

1-6　　　　　　　　1-9

　　　　　　　　　1-6

**FIG. 16**

7

8

**FIG. 17**

7

8

**FIG. 18**

F    F1

F2

Inclined wing ring (side view)

**FIG. 19**

## INTERNATIONAL SEARCH REPORT

| International application No. |
|---|
| **PCT/CN2020/000028** |

### A. CLASSIFICATION OF SUBJECT MATTER

B64C 1/08(2006.01)i; F03D 9/00(2016.01)i

According to International Patent Classification (IPC) or to both national classification and IPC

### B. FIELDS SEARCHED

Minimum documentation searched (classification system followed by classification symbols)

B64C1/-; F03D9/-

Documentation searched other than minimum documentation to the extent that such documents are included in the fields searched

Electronic data base consulted during the international search (name of data base and, where practicable, search terms used)

WPI, EPODOC, CNPAT, CNKI: 翼环, 环翼, 旋翼, 飞碟, 飞行器, 无人机, 飞机, 航空, 高空, 发电, 缆, 绳, 风轮, 对拉, 伸缩, 旋, 转, 偏, 斜, 升力, ring+, saucer+, fuselage+, radial+, disk+, annular+, wing+, aerial+, vehicl+, cable+, wind+, wheel+, draw+, flex+, rotat+, deflex+, up+, ris+.

### C. DOCUMENTS CONSIDERED TO BE RELEVANT

| Category* | Citation of document, with indication, where appropriate, of the relevant passages | Relevant to claim No. |
|---|---|---|
| X | CN 108438217 A (LUO, Conggui) 24 August 2018 (2018-08-24) description, specific embodiments, and figures 1-38 | 1-8 |
| X | CN 104976074 A (LUO, Conggui) 14 October 2015 (2015-10-14) description, paragraphs 333-694, and figures 1-85 | 9-11 |
| A | CN 104018990 A (LUO, Conggui) 03 September 2014 (2014-09-03) entire document | 1-11 |
| A | CN 103195662 A (LUO, Conggui) 10 July 2013 (2013-07-10) entire document | 1-11 |
| A | CN 102720633 A (LUO, Conggui) 10 October 2012 (2012-10-10) entire document | 1-11 |
| A | CN 107089323 A (XU, Congyi) 25 August 2017 (2017-08-25) entire document | 1-11 |
| A | CN 103277246 A (CHANGZHOU CAMPUS OF HOHAI UNIVERSITY) 04 September 2013 (2013-09-04) entire document | 1-11 |

| ☑ Further documents are listed in the continuation of Box C. | ☑ See patent family annex. |
|---|---|

| | * Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 April 2020** | **29 April 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**EP 3 901 029 A1**

**INTERNATIONAL SEARCH REPORT**

| International application No. |
| --- |
| **PCT/CN2020/000028** |

**C.    DOCUMENTS CONSIDERED TO BE RELEVANT**

| Category* | Citation of document, with indication, where appropriate, of the relevant passages | Relevant to claim No. |
| --- | --- | --- |
| A | GB 2312709 A (BURNS, D. J.) 05 November 1997 (1997-11-05) <br> entire document | 1-11 |

Form PCT/ISA/210 (second sheet) (January 2015)

24

**INTERNATIONAL SEARCH REPORT**
Information on patent family members

International application No.

**PCT/CN2020/000028**

| Patent document cited in search report | | | Publication date (day/month/year) | Patent family member(s) | Publication date (day/month/year) |
|---|---|---|---|---|---|
| CN | 108438217 | A | 24 August 2018 | None | |
| CN | 104976074 | A | 14 October 2015 | None | |
| CN | 104018990 | A | 03 September 2014 | None | |
| CN | 103195662 | A | 10 July 2013 | None | |
| CN | 102720633 | A | 10 October 2012 | None | |
| CN | 107089323 | A | 25 August 2017 | None | |
| CN | 103277246 | A | 04 September 2013 | None | |
| GB | 2312709 | A | 05 November 1997 | None | |

Form PCT/ISA/210 (patent family annex) (January 2015)

**EP 3 901 029 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019033691 A
- CN 110282133 A